(19) Europäisches Patentamt
European Patent Office
Office européen des brevets

(11) **EP 4 092 299 A1**

(12) **EUROPÄISCHE PATENTANMELDUNG**

(43) Veröffentlichungstag:
**23.11.2022   Patentblatt 2022/47**

(21) Anmeldenummer: **22168122.4**

(22) Anmeldetag: **13.04.2022**

(51) Internationale Patentklassifikation (IPC):
**F16K 37/00** *(2006.01)*     **F15B 19/00** *(2006.01)*

(52) Gemeinsame Patentklassifikation (CPC):
**F16K 37/0041; F16K 37/005;** F15B 19/005;
F15B 2211/6306; F15B 2211/632; F15B 2211/634;
F15B 2211/6343; F15B 2211/857

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **19.05.2021   DE 102021112984**

(71) Anmelder: **Gemü Gebr. Müller Apparatebau GmbH
& Co.
Kommanditgesellschaft
74653 Ingelfingen (DE)**

(72) Erfinder: **Wissinger, Marco
97944 Boxberg (DE)**

(74) Vertreter: **DREISS Patentanwälte PartG mbB
Friedrichstraße 6
70174 Stuttgart (DE)**

(54) **VERFAHREN UND VORRICHTUNG ZUM BETREIBEN EINES VENTILBLOCKS ODER VENTILKÖRPERS**

(57)     Es wird ein Verfahren zum Betreiben eines Ventilblocks (200) bereitgestellt, wobei ein Innenraum (202) des Ventilblocks (200) von feststehenden Wandungen und beweglichen Stellmitteln, die Ventileinheiten (210, 220) zugeordnet sind, begrenzt wird, wobei eine Mehrzahl von Anschlüssen (230a-d) in den Innenraum (202) des Ventilblocks (200) führen.

Fig. 2

EP 4 092 299 A1

**Beschreibung**

Die vorliegende Beschreibung betrifft Fortschritte im Bereich Ventiltechnik, insbesondere für den Betrieb von Ventilblöcken und Ventilkörpern.

Die Probleme des Standes der Technik werden durch ein Verfahren gemäß dem Anspruch 1 sowie durch eine Vorrichtung gemäß einem nebengeordneten Anspruch gelöst.

Ein erster Aspekt der Beschreibung betrifft ein Verfahren zum Betreiben eines Ventilblocks, wobei ein Innenraum des Ventilblocks von feststehenden Wandungen und beweglichen Stellmitteln, die Ventileinheiten zugeordnet sind, begrenzt wird, wobei eine Mehrzahl von Anschlüssen in den Innenraum des Ventilblocks führen. Das Verfahren umfasst: Ermitteln einer Mehrzahl von Ventilstellungen der jeweiligen Stellmittel; Ermitteln einer Mehrzahl von Prozessfluid-Drücken, die mit einem jeweiligen der Anschlüsse assoziiert sind, auf Grundlage einer jeweiligen Messung; Ermitteln einer Mehrzahl von Prozessfluid-Geschwindigkeiten, die mit einem jeweiligen der Anschlüsse assoziiert sind, auf Grundlage einer jeweiligen Messung; und Ermitteln wenigstens eines einen Zustand des durch den Innenraum des Ventilblocks fließenden Prozessfluids repräsentierenden Kennwerts in Abhängigkeit von der Mehrzahl von Ventilstellungen, der Mehrzahl von Prozessfluid-Drücken und der Mehrzahl von Prozessfluid-Geschwindigkeiten insbesondere mittels einer Funktion, welche zumindest einen Teil des Prozessfluid-gefüllten Innenraums des Ventilblocks modelliert.

Vorteilhaft kann so auf einfache Art und Weise eine Echtzeit-fähige Überwachung des Zustandes des Prozessfluids innerhalb des Ventilblocks erfolgen.

In einem vorteilhaften Beispiel umfasst das Verfahren: Vergleichen des wenigstens einen Kennwerts mit einem Schwellwert; und Bereitstellen eines Ergebnisses des Vergleichs.

Somit kann durch eine einfache Vergleichsoperation der Zustand des Prozessfluids ermittelt werden.

Ein vorteilhaftes Beispiel zeichnet sich dadurch aus, dass der wenigstens eine Kennwert wenigstens eine lokale Scherspannung und/oder die Gesamtheit der Scherspannungen charakterisiert, die innerhalb des Ventilkörpers auf das Prozessfluid wirkt.

Vorteilhaft können insbesondere empfindliche Biokulturen, die in dem Prozessfluid enthalten sind, auf deren Qualität oder Schädigung hin überprüft werden. So kann durch die Berücksichtigung des Kennwerts verhindert werden, dass zu große Scherspannungen innerhalb des Ventilkörpers auftreten und die Biokulturen schädigen oder gar zerstören.

In einem vorteilhaften Beispiel umfasst das Verfahren: Ermitteln einer Mehrzahl von Kennwerten in Abhängigkeit von lokalen Scherspannungen und assoziierten lokalen Wandschubspannungen.

Vorteilhaft werden damit ortsbezogene Kennwerte ermittelt, die dann mit dem Schwellwert verglichen werden können. Die Temperatur der Strömung hat einen Einfluss darauf, wie groß die zulässigen Scherspannungen im Medium werden dürfen, d. h. die zulässige Scherspannung der Biokultur ist abhängig von den Temperaturen. Dieser Zusammenhang kann beispielsweise über ein Kennfeld abgebildet werden.

In einem vorteilhaften Beispiel umfasst das Verfahren: Ermitteln von lokalen Scherspannungen des Prozessfluids innerhalb des Innenraums in Abhängigkeit von lokalen turbulenten Viskositäten, einer dynamischen Viskosität, den Prozessfluid-Geschwindigkeiten und den Prozessfluid-Drücken.

In einem vorteilhaften Beispiel umfasst das Verfahren: Ermitteln der turbulenten Viskosität in Abhängigkeit von der Mehrzahl von Prozessfluid-Drücken und der Mehrzahl von Prozessfluid-Geschwindigkeiten, insbesondere mittels einem Modell.

In einem vorteilhaften Beispiel umfasst das Verfahren: Ermitteln einer das Prozessfluid identifizierenden Kennung; und Ermitteln der dynamischen Viskosität in Abhängigkeit von der das Prozessfluid identifizierenden Kennung; und Vorteilhaft kann der Kennwert für eine Vielzahl von Prozessfluiden bereitgestellt werden.

In einem vorteilhaften Beispiel umfasst das Verfahren: Ermitteln von lokalen Wandschubspannungen des Prozessfluids innerhalb des Innenraums in Abhängigkeit von der dynamischen Viskosität, den Prozessfluid-Geschwindigkeiten und den Prozessfluid-Drücken, insbesondere mittels einem Modell.

In einem vorteilhaften Beispiel umfasst das Verfahren: Ermitteln einer den Ventilblock identifizierenden Kennung; und

Auswählen des zumindest zu einem Teil vorberechneten Modells aus einer Mehrzahl von Modellen in Abhängigkeit von der Mehrzahl von Ventilstellungen und in Abhängigkeit von der Kennung.

Vorteilhaft können so eine Mehrzahl von vorberechneten Modellen vorgehalten werden, die die jeweilige Ventilstellung und den korrespondierenden inneren Wandungsverlauf des Ventilkörpers repräsentieren. Vorteilhaft verringert sich durch diese Vorberechnung die Zeit zur Bestimmung der lokalen Scherspannungen und lokalen Wandschubspannungen.

In einem vorteilhaften Beispiel umfasst das Verfahren: Ermitteln wenigstens einer Prozessfluid-Temperatur, die mit einem zugeordneten der Anschlüsse assoziiert ist, auf Grundlage einer Messung; Ermitteln des Schwellwerts zum Vergleich mit dem ermittelten Kennwert in Abhängigkeit von der Prozessfluid-Temperatur.

In einem vorteilhaften Beispiel umfasst das Verfahren: Verändern eines Prozessparameters betreffend das Prozessfluid, insbesondere eine der mit wenigstens einem der Anschlüsse assoziierten Prozessfluid-Geschwindigkeiten oder eine mit dem Ventilkörper assoziierte Ventilstellung, in Abhängigkeit von dem wenigstens einen Kennwert.

Ein zweiter Aspekt der Beschreibung betrifft eine Vorrichtung umfassend: Mittel zum Ermitteln einer Mehrzahl von Ventilstellungen der jeweiligen Stellmittel; Mittel zum Ermitteln einer Mehrzahl von Prozessfluid-Drücken, die mit einem jeweiligen der Anschlüsse assoziiert sind, auf Grundlage einer jeweiligen Messung; Mittel zum Ermitteln einer Mehrzahl von Prozessfluid-Geschwindigkeiten, die mit einem jeweiligen der Anschlüsse assoziiert sind, auf Grundlage einer jeweiligen Messung; und Mittel zum Ermitteln wenigstens eines einen Zustand des durch den Innenraum des Ventilblocks fließenden Prozessfluids repräsentierenden Kennwerts in Abhängigkeit von der Mehrzahl von Ventilstellungen, der Mehrzahl von Prozessfluid-Drücken und der Mehrzahl von Prozessfluid-Geschwindigkeiten insbesondere mittels einer Funktion, welche zumindest einen Teil des Prozessfluid-gefüllten Innenraums des Ventilblocks modelliert.

Ein vorteilhaftes Beispiel zeichnet sich dadurch aus, dass die Vorrichtung insbesondere über ein Weitverkehrskommunikationsnetz entfernt von dem Ventilblock angeordnet ist.

In der Zeichnung zeigen:

Figur 1    ein schematisches Blockdiagramm einer Vorrichtung;
Figur 2    einen schematisch dargestellten Ventilblock; und
Figur 3    ein Ausführungsbeispiel der Vorrichtung und des Ventilblocks.

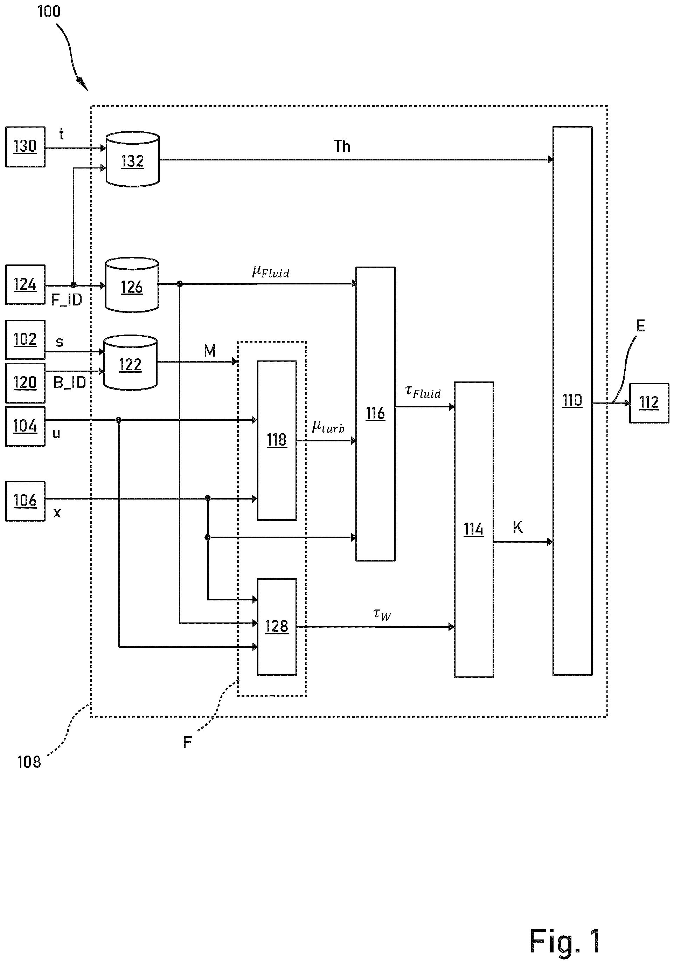

Figur 1 zeigt in einem schematischen Blockdiagramm eine Vorrichtung 100 bzw. ein Verfahren zum Betreiben eines Ventilblocks oder Ventilkörpers. Die nachfolgende Beschreibung ist auf einen Ventilblock bezogen, der mehrere Ventileinheiten umfasst. Selbstverständlich sind die beschriebenen Methoden auch auf einen Ventilkörper anwendbar, der lediglich mit einer Ventileinheit ausgestattet ist. Ein Ermitteln in dieser Beschreibung kann ein Empfangen von Daten umfassen. Ein Bereitstellen in dieser Beschreibung kann ein Versenden von Daten umfassen.

Die Vorrichtung 100 umfasst Mittel 102 zum Ermitteln einer Mehrzahl von aktuellen Ventilstellungen s der jeweiligen Stellmittel beispielsweise auf Grundlage einer Mehrzahl von Stellungsmeldungen von Stellungsrückmeldern, die mit Antrieben von Ventileinheiten verbunden sind.

Die Vorrichtung 100 umfasst Mittel 104 zum Ermitteln einer Mehrzahl von aktuellen Prozessfluid-Drücken u, die mit einem jeweiligen von Anschlüssen des Ventilblocks assoziiert sind, auf Grundlage einer jeweiligen Messung.

Des Weiteren sind Mittel 106 zum Ermitteln, auf Grundlage einer jeweiligen Messung, einer Mehrzahl von aktuellen Prozessfluid-Geschwindigkeiten x vorgesehen, wobei die Prozessfluid-Geschwindigkeiten x mit einem jeweiligen der Anschlüsse 230a-d assoziiert sind.

Die Vorrichtung 100 umfasst Mittel 108 zum Ermitteln wenigstens eines einen aktuellen Zustand des durch den Innenraum 202 des Ventilblocks 200 fließenden Prozessfluids repräsentierenden Kennwerts K in Abhängigkeit von der Mehrzahl von Ventilstellungen s, der Mehrzahl von Prozessfluid-Drücken u und der Mehrzahl von Prozessfluid-Geschwindigkeiten x insbesondere mittels einer Funktion F, welche zumindest einen Teil des Prozessfluid-gefüllten Innenraums 202 des Ventilblocks 200 modelliert. Der wenigstens eine Kennwert K charakterisiert wenigstens eine lokale Scherspannung, die innerhalb des Ventilkörpers 200 auf das Prozessfluid wirkt. Der Kennwert K ist in einem Beispiel eine lokale Verknüpfung der lokalen Scherspannung und der lokalen Wandschubspannung.

Je nach Ausprägung des Ventilblocks bzw. Ventilkörpers und dessen Komplexität der Wandungen der Fluidkanäle kann sich die Anzahl der nötigen Messpunkte außerhalb des Ventilblocks bzw. Ventilkörpers unterscheiden. Jedes Modell für die Funktion F ist also an den jeweiligen Ventilblock bzw. Ventilkörper angepasst und ist mit einer Empfehlung an den Verwender bezüglich der Anordnung und Anzahl der Messungen von zumindest einer der Prozessfluid-Geschwindigkeiten und zumindest einem der Prozessfluid-Drücke und zumindest einer der Ventilstellungen verbunden.

Die Vorrichtung 100 umfasst Mittel 110 zum Vergleichen des wenigstens einen Kennwerts mit einem Schwellwert Th; und Bereitstellen 112 eines Ergebnisses E des Vergleichs.

Die Vorrichtung 100 umfasst Mittel 114 zum Ermitteln einer Mehrzahl von Kennwerten K in Abhängigkeit von lokalen Scherspannungen und assoziierten lokalen Wandschubspannungen.

Die Vorrichtung 100 umfasst Mittel 116 zum Ermitteln von lokalen Scherspannungen des Prozessfluids innerhalb des Innenraums in Abhängigkeit von lokalen turbulenten Viskositäten, einer dynamischen Viskosität, den Prozessfluid-Geschwindigkeiten x und den Prozessfluid-Drücken u.

Die Vorrichtung 100 umfasst Mittel 118 zum Ermitteln der turbulenten Viskosität in Abhängigkeit von der Mehrzahl von Prozessfluid-Drücken u und der Mehrzahl von Prozessfluid-Geschwindigkeiten x, insbesondere mittels einem Modell M. Die Berechnung der Geschwindigkeits- und Druckverteilung im Prozessfluid erfolgt durch die Funktion F, die das ausgewählte Modell M nutzt, gemäß der RANS-Gleichung (1) (RANS: Reynolds-Averaged Navier-Stokes). Hierbei werden zur Vereinfachung die Dichte $\rho$ und die dynamische Viskosität $\eta$ als konstant angenommen.

$$\frac{\partial \overline{u}_i}{\partial t} + \overline{u}_j \frac{\partial \overline{u}_j}{\partial x_j} = \frac{1}{\rho} \frac{\delta}{\delta x_j} \left( - \underbrace{\overline{p}\delta_{ij} + 2\eta\delta_{ij} \overbrace{-\rho \overline{u}_i' \overline{u}_i'}^{=\tau_{ij}}}_{=TMS} \right) \qquad (1)$$

Der Reynold'sche Spannungstensor $\tau_{ij}$ wird von einem Turbulenzmodell in CFD modelliert (CFD: Computational Fluid Dynamics). Mit dem Spannungstensor $\tau_{ij}$ werden Spannungen (Normal- und Scherspannungen) beschrieben, die sich aus den turbulenten Geschwindigkeitsfluktuationen der Strömung ergeben. Der Spannungstensor $\tau_{ij}$ wird durch das gewählte Turbulenzmodell modelliert. Mithilfe des Turbulenzmodells wird eine turbulente Viskosität $\mu_{turb}$ berechnet. Es besteht also ein Zusammenhang zwischen dem Spannungstensor $\tau_{ij}$ und der turbulenten lokalen Viskosität $\mu_{turb}$. Die Berechnung dieses Zusammenhangs geschieht in der Simulation gemäß der Funktion F. Die turbulente Viskosität $\mu_{turb}$ ist nicht konstant, sondern ändert sich lokal in der Strömung. Scherspannungskomponenten aus dem Term TMS ("Total Mean Stress") werden ebenfalls in CFD berechnet. Randbedingungen für die Simulation kommen von Sensoren, die an oder in der Nähe von Anschlüssen des Ventilblocks angeordnet sind. Dadurch entsteht ein simulationsbasierter digitaler Zwilling.

Die Berechnung der Scherspannung $\tau_{Fluid}$ gemäß dem Block 116 für das Prozessfluid erfolgt gemäß Gleichung (2). Eine dynamische Viskosität $\mu_{Fluid}$ des Prozessfluids ist eine Eigenschaft des Prozessfluids. Die dynamische Viskosität $fJ\text{-}_{Fiuid}$ des Prozessfluids ist ein Stoffparameter/eine Materialeigenschaft. Dieser Wert stammt beispielsweise aus einer Stoffdatenbank. In einem Beispiel wird die dynamische Viskosität nicht konstant gewählt, sondern ändert sich durch die aufgebrachten Scherraten in der Strömung. Die turbulente Viskosität $\mu_{turb}$ wird durch ein Turbulenzmodell berechnet. Eine Schergeschwindigkeit $\dot{x}$ wird aus Gradienten des Geschwindigkeitsfeldes berechnet.

$$\tau_{Fluid} = (\mu_{Fluid} + \mu_{turb})\dot{x} \qquad (2)$$

Die Vorrichtung 100 umfasst Mittel 124 zum Ermitteln einer das Prozessfluid identifizierenden Kennung F_ID. Die Vorrichtung 100 umfasst Mittel 126 zum Ermitteln der dynamischen Viskosität in Abhängigkeit von der das Prozessfluid identifizierenden Kennung F_ID.

Die Vorrichtung 100 umfasst Mittel 128 zum Ermitteln von lokalen Wandschubspannungen des Prozessfluids innerhalb des Innenraums 202 in Abhängigkeit von der dynamischen Viskosität, den Prozessfluid-Geschwindigkeiten und den Prozessfluid-Drücken, insbesondere mittels dem Modell M.

Das Modell M ist beispielsweise als Reduced Order Model ausgebildet, was zum einen eine Approximation darstellt aber gleichzeitig eine echtzeitfähige Lösung darstellt. Echtzeitfähig bedeutet in diesem Zusammenhang, dass eine Berechnungszeit für den wenigstens einen Kennwert K ausreicht, um den mittels des Ventilblocks durchgeführten Prozess zeitnah so zu beeinflussen, dass das Prozessmedium keinen Schaden nimmt. Das Modell M stellt einen Zusammenhang zwischen Volumenströmen, Temperatur, Materialeigenschaften des Prozessfluids und statischem Druck her.

Eine Berechnung einer Wandschubspannung des Prozessfluids im Block 128 erfolgt gemäß Gleichung (3), wobei $y$ die Wandnormalenrichtung angibt, und wobei $u$ die Strömung bzw. die Strömungsgeschwindigkeit parallel zur Wandfläche angibt.

$$\tau_W = \mu_{Fluid} \left( \frac{\delta u}{\delta y} \right) \Big|_{@WALL} \qquad (3)$$

Ein Vergleich der lokalen Scherspannung $\tau_{Fluid}(x,y,z)$ und der lokalen Wandschubspannung $\tau_W(x,y,z)$ mit einer maximal zulässigen Scherspannung $\tau_{Fluid,max}$ des Prozessfluids erfolgt gemäß Ungleichung (4).

$$\tau_{Fluid}(x,y,z) + \tau_W(x,y,z) < \tau_{Fluid,max} \qquad (4)$$

Die Vorrichtung 100 umfasst Mittel 120 zum Ermitteln einer den Ventilblock 200 identifizierenden Kennung B_ID. Die Vorrichtung 100 umfasst Mittel 122 zum Auswählen des zumindest zu einem Teil vorberechneten Modells M aus einer Mehrzahl von Modellen in Abhängigkeit von der Mehrzahl von Ventilstellungen s und in Abhängigkeit von der Kennung B_ID.

Die Vorrichtung 100 umfasst Mittel 130 zum Ermitteln wenigstens einer Prozessfluid-Temperatur t, die mit einem zugeordneten der Anschlüsse 230a-d assoziiert ist, auf Grundlage einer Messung. Die Vorrichtung 100 umfasst Mittel 132 zum Ermitteln des Schwellwerts Th zum Vergleich mit dem ermittelten Kennwert K in Abhängigkeit von der Prozessfluid-Temperatur t.

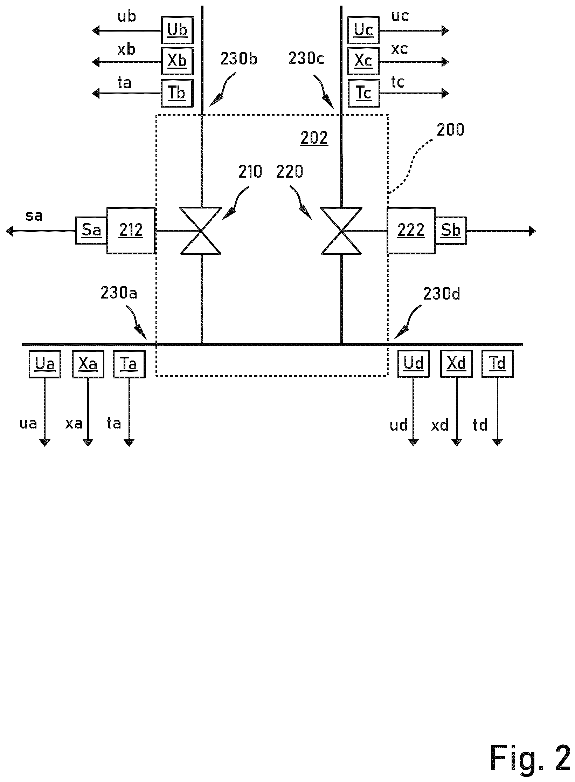

Figur 2 zeigt den schematisch dargestellten Ventilblock 200. Der Ventilblock 200 umfasst einen einstückigen Ventilblockkörper. Ein Innenraum 202 des Ventilblocks 200 ist von feststehenden Wandungen, insbesondere Ventilkammern und Prozessfluid-Kanälen, und beweglichen Stellmitteln wie beispielsweise Ventilmembranen, die mit einem Ventilsitz zusammenwirken, die Ventileinheiten 210, 220 zugeordnet sind, begrenzt. Eine Mehrzahl der Anschlüsse 230a-führt in den Innenraum 202 des Ventilblocks 200.

Ein Drucksensor Ua-d ermittelt im Bereich des Anschlusses 230a-d den Prozessfluid-Druck ua-du. Ein Sensor Xa-d ermittelt eine Geschwindigkeit xa-d des Prozessfluids im Bereich des Anschlusses 230a-d. Ein Temperatursensor Ta-d ermittelt eine Temperatur ta-d des Prozessfluids im Bereich des Anschlusses 230a-d.

Ein Stellungsrückmelder Sa-b ist beispielsweise einem Antrieb 212, 222 des Ventileinheit 210, 220 zugeordnet und ermittelt die aktuelle Ventilstellung sa-b des Stellmittels.

Der dargestellte Ventilblock 200 ist selbstverständlich nur beispielhaft und kann auch eine andere Konfiguration der Prozessfluid-Kanäle, Anschlüsse und Ventileinheiten aufweisen.

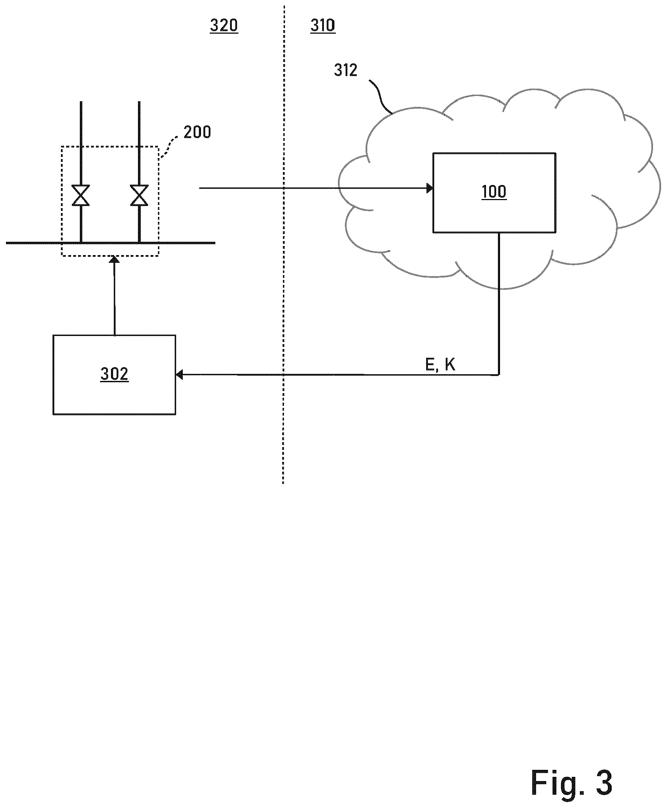

Figur 3 zeigt in schematischer Form ein Beispiel zur Verwendung der Vorrichtung 100 aus Figur 1. Ein Hersteller 310 des Ventilblocks 200 betreibt beispielsweise einen Cloud-Service 312, der mittels der Vorrichtung 100 aus Figur 1 realisiert wird. Ein Betreiber 320 des Ventilblocks 200 stellt die vorangehend beschriebenen Daten bereit bzw. übermittelt diese über ein Weitverkehrsnetz an den entfernt angeordneten Cloud-Service 312.

In einem nicht gezeigten Beispiel kann die Vorrichtung 100, also der simulationsbasierte digitale Zwilling, auch auf einem Server des Kunden oder auf einer anderen Computereinrichtung, beispielsweise einem Edge Device, ablaufen.

Das durch die Vorrichtung 100 ermittelte Ergebnis E wird an den Betreiber 320 übermittelt. Diese kann dann seinen Prozess entsprechend anpassen. Beispielsweise sind Mittel 302 vorgesehen zum Verändern eines Prozessparameters betreffend das Prozessfluid, insbesondere eine der mit wenigstens einem der Anschlüsse assoziierten Prozessfluid-Geschwindigkeiten oder eine mit dem Ventilkörper 200 assoziierte Ventilstellung, in Abhängigkeit von dem wenigstens einen Kennwert K bzw. dem Ergebnis E.

**Patentansprüche**

1. Ein Verfahren zum Betreiben eines Ventilblocks (200) oder Ventilkörpers, wobei ein Innenraum (202) des Ventilblocks (200) oder Ventilkörpers von feststehenden Wandungen und wenigstens einem beweglichen Stellmittel, die einer Ventileinheit (210, 220) zugeordnet ist, begrenzt wird, wobei eine Mehrzahl von Anschlüssen (230a-d) in den Innenraum (202) des Ventilblocks (200) oder Ventilkörpers führen, und wobei das Verfahren umfasst:

   Ermitteln (102) wenigstens einer Ventilstellung (s) de wenigstens einen Stellmittels;
   Ermitteln (104) wenigstens eines Prozessfluid-Drucks (u), der mit einem jeweiligen der Anschlüsse (230a-d) assoziiert ist, auf Grundlage einer Messung;
   Ermitteln (106) wenigstens einer Prozessfluid-Geschwindigkeit (x), die mit einem jeweiligen der Anschlüsse (230a-d) assoziiert ist, auf Grundlage einer Messung; und
   Ermitteln (108) wenigstens eines einen Zustand eines durch den Innenraum (202) des Ventilblocks (200) oder Ventilkörpers fließenden Prozessfluids repräsentierenden Kennwerts (K) in Abhängigkeit von der wenigstens einen Ventilstellung (s), des wenigstens einen Prozessfluid-Drucks (u) und der wenigstens einen Prozessfluid-Geschwindigkeit (x) insbesondere mittels einer Funktion (F), welche zumindest einen Teil des Prozessfluid-gefüllten Innenraums (202) des Ventilblocks (200) oder Ventilkörpers modelliert.

2. Das Verfahren gemäß Anspruch 1 umfassend:

   Vergleichen (110) des wenigstens einen Kennwerts mit einem Schwellwert (Th); und
   Bereitstellen (112) eines Ergebnisses (E) des Vergleichs.

3. Das Verfahren gemäß einem der vorigen Ansprüche, wobei der wenigstens eine Kennwert (K) wenigstens eine lokale Scherspannung charakterisiert, die innerhalb des Ventilkörpers (200) auf das Prozessfluid wirkt.

4. Das Verfahren gemäß einem der vorigen Ansprüche umfassend:
   Ermitteln (114) einer Mehrzahl von Kennwerten (K) in Abhängigkeit von lokalen Scherspannungen und assoziierten lokalen Wandschubspannungen.

5. Das Verfahren gemäß einem der vorigen Ansprüche umfassend:

Ermitteln (116) von lokalen Scherspannungen des Prozessfluids innerhalb des Innenraums in Abhängigkeit von lokalen turbulenten Viskositäten, einer dynamischen Viskosität, der wenigstens einen Prozessfluid-Geschwindigkeit und des wenigstens einen Prozessfluid-Drucks.

6. Das Verfahren gemäß dem Anspruch 5 umfassend:
Ermitteln (118) der turbulenten Viskosität in Abhängigkeit von dem wenigstens einen Prozessfluid-Druck (u) und der wenigstens einen Prozessfluid-Geschwindigkeit (x), insbesondere mittels einem Modell (M).

7. Das Verfahren gemäß dem Anspruch 5 oder 6 umfassend:

Ermitteln (124) einer das Prozessfluid identifizierenden Kennung (F_ID); und
Ermitteln (126) der dynamischen Viskosität in Abhängigkeit von der das Prozessfluid identifizierenden Kennung (F_ID); und

8. Das Verfahren gemäß einem der vorigen Ansprüche umfassend:
Ermitteln (128) von lokalen Wandschubspannungen des Prozessfluids innerhalb des Innenraums (202) in Abhängigkeit von der dynamischen Viskosität, der wenigstens einen Prozessfluid-Geschwindigkeit und dem wenigstens einen Prozessfluid-Druck, insbesondere mittels einem Modell (M).

9. Das Verfahren gemäß einem der Ansprüche 6 oder 8 umfassend:

Ermitteln (120) einer den Ventilblock (200) identifizierenden Kennung (B_ID); und
Auswählen (122) des zumindest zu einem Teil vorberechneten Modells (M) aus einer Mehrzahl von Modellen in Abhängigkeit von der wenigstens einen Ventilstellung (s) und in Abhängigkeit von der Kennung (B_ID).

10. Das Verfahren gemäß einem der vorigen Ansprüche umfassend:

Ermitteln (130) wenigstens einer Prozessfluid-Temperatur (t), die mit einem zugeordneten der Anschlüsse (230a-d) assoziiert ist, auf Grundlage einer Messung;
Ermitteln (132) des Schwellwerts (Th) zum Vergleich mit dem ermittelten Kennwert (K) in Abhängigkeit von der Prozessfluid-Temperatur (t).

11. Das Verfahren gemäß einem der vorigen Ansprüche umfassend:
Verändern (302) eines Prozessparameters betreffend das Prozessfluid, insbesondere eine der mit wenigstens einem der Anschlüsse assoziierten Prozessfluid-Geschwindigkeiten (u) oder eine mit dem Ventilkörper (200) assoziierte Ventilstellung, in Abhängigkeit von dem wenigstens einen Kennwert (K).

12. Eine Vorrichtung (100) zum Betreiben eines Ventilblocks (200) oder Ventilkörpers, wobei ein Innenraum (202) des Ventilblocks (200) oder Ventilkörpers von feststehenden Wandungen und wenigstens einem beweglichen Stellmittel, die einer Ventileinheit (210, 220) zugeordnet ist, begrenzt wird, wobei eine Mehrzahl von Anschlüssen (230a-d) in den Innenraum (202) des Ventilblocks (200) oder Ventilkörpers führen, die Vorrichtung (100) umfassend:

Mittel (102) zum Ermitteln wenigstens einer Ventilstellung (s) des wenigstens einen Stellmittels;
Mittel (104) zum Ermitteln wenigstens eines Prozessfluid-Drucks (u), der mit einem jeweiligen der Anschlüsse (230a-d) assoziiert ist, auf Grundlage einer Messung;
Mittel (106) zum Ermitteln wenigstens einer Prozessfluid-Geschwindigkeit (x), die mit einem jeweiligen der Anschlüsse (230a-d) assoziiert ist, auf Grundlage einer Messung; und
Mittel (108) zum Ermitteln wenigstens eines einen Zustand eines durch den Innenraum (202) des Ventilblocks (200) fließenden Prozessfluids repräsentierenden Kennwerts (K) in Abhängigkeit von der wenigstens einen Ventilstellung (s), dem wenigstens einen Prozessfluid-Druck (u) und der wenigstens einen Prozessfluid-Geschwindigkeit (x) insbesondere mittels einer Funktion (F), welche zumindest einen Teil des Prozessfluid-gefüllten Innenraums (202) des Ventilblocks (200) modelliert.

13. Die Vorrichtung (100) gemäß dem Anspruch 12, wobei die Vorrichtung (100) insbesondere über ein Weitverkehrskommunikationsnetz entfernt von dem Ventilblock (200) angeordnet ist.

Fig. 1

Fig. 2

Fig. 3

Europäisches
Patentamt

European
Patent Office

Office européen
des brevets

# EUROPÄISCHER RECHERCHENBERICHT

**Nummer der Anmeldung**

EP 22 16 8122

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,P | EP 3 875 820 A1 (SAMSON AG [DE]) 8. September 2021 (2021-09-08) | 1,2, 11-13 | INV. F16K37/00 |
| A,P | * Absätze [0001], [0020], [0023], [0052], [0053], [0054], [0055], [0057]; Abbildungen 3,4,5 * ----- | 3-10 | ADD. F15B19/00 |
| A | US 2018/171818 A1 (NIMCHAN SHANNON [US] ET AL) 21. Juni 2018 (2018-06-21) * Absätze [0006], [0027], [0028]; Abbildung 1; Beispiele 116,212,128,232 * ----- | 1-13 | |
| A | WO 2020/115609 A1 (ATLAS COPCO AIRPOWER NV [BE]) 11. Juni 2020 (2020-06-11) * p.12,li.1-5,li.31-p.13,li.2;p.16,li.1-2,li.11-15; Abbildung 1; Beispiele 10a,10b,9a,9b,9c * ----- | 1-13 | |
| A | EP 2 778 439 A2 (INGERSOLL RAND CO [US]) 17. September 2014 (2014-09-17) * Absätze [0003], [0018], [0019], [0022]; Abbildungen 1,3; Beispiele 140,142 * ----- | 1,12,13 | |

**RECHERCHIERTE SACHGEBIETE (IPC)**

F16K
F15B

Der vorliegende Recherchenbericht wurde für alle Patentansprüche erstellt

| Recherchenort | Abschlußdatum der Recherche | Prüfer |
|---|---|---|
| **München** | **27. September 2022** | **Deligiannidis, N** |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 16 8122

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-09-2022

| Im Recherchenbericht angeführtes Patentdokument | Datum der Veröffentlichung | Mitglied(er) der Patentfamilie | Datum der Veröffentlichung |
|---|---|---|---|
| EP 3875820 A1 | 08-09-2021 | CN 113339356 A | 03-09-2021 |
| | | DE 102020105695 A1 | 09-09-2021 |
| | | EP 3875820 A1 | 08-09-2021 |
| | | US 2021278013 A1 | 09-09-2021 |
| US 2018171818 A1 | 21-06-2018 | US 2018171818 A1 | 21-06-2018 |
| | | US 2020256207 A1 | 13-08-2020 |
| WO 2020115609 A1 | 11-06-2020 | BE 1026849 A1 | 02-07-2020 |
| | | CN 113677972 A | 19-11-2021 |
| | | EP 3891485 A1 | 13-10-2021 |
| | | JP 2022512111 A | 02-02-2022 |
| | | KR 20210100630 A | 17-08-2021 |
| | | US 2021381654 A1 | 09-12-2021 |
| | | WO 2020115609 A1 | 11-06-2020 |
| EP 2778439 A2 | 17-09-2014 | EP 2778439 A2 | 17-09-2014 |
| | | US 2014266711 A1 | 18-09-2014 |

EPO FORM P0461

Für nähere Einzelheiten zu diesem Anhang : siehe Amtsblatt des Europäischen Patentamts, Nr.12/82